# EUROPEAN PATENT APPLICATION

(11) **EP 1 489 547 A1**
(43) Date of publication of application: **22.12.2004**
(21) Application number: 04253538.5
(22) Date of filing: 14.06.2004
(51) Int. Cl.: G06F 17/60, H04L 12/56, H04M 1/725

(54) **Method for indicating availability of a predetermined item**

(30) Priority: 19.06.2003 US 464916
(71) Applicant: LUCENT TECHNOLOGIES INC., Murray Hill, New Jersey 07974-0636 (US)
(72) Inventor: Lee, Anne Yin-Fee, Naperville Illinois 60563 (US); Martin, Ronald Bruce, Carol Stream Illinois 60188 (US)
(74) Representative: Watts, Christopher Malcolm Kelway, Dr.

(57) **Abstract**

The present invention provides a method for indicating a predetermined item in a communication system. A mobile unit indicates a predetermined item to an online screening processor. The online screening processor initiates a session with an online commerce site to determine if the predetermined items are available. The mobile unit receives and displays this indication of the availability of the predetermined item from the online screening processor. The mobile unit then accepts input from the user of the mobile unit and sends the input to the online screening processor. A multimedia session is then established between the mobile unit and the online commerce site. The multimedia session connects the mobile unit and online commerce site to facilitate an exchange of information between the two with the intent that the mobile user may purchase or receive additional information about the item from the online commerce site.

## Description

### FIELD OF THE INVENTION:

The present invention relates generally to utilizing communication systems to purchase online items, and more particularly to a method for indicating the availability of a predetermined item at an online commerce site.

### BACKGROUND OF THE INVENTION:

Online commerce sites sell items, such as products or services, to purchasers who access the online commerce sites via various means.

Customers may wish to indicate a preference for a particular item. For example, a customer may wish to indicate to the online commerce site an interest in a particular used item should the item become available. Further, a customer may wish to be alerted of new items offered for sale, such as the latest novel released by a favorite author.

One problem with unique items, such as collectibles or houses, is the problem of someone else purchasing the item before you. In particular, for items that have a high demand and a low supply, the items can be sold almost immediately, which is frustrating for an interested buyer. This can be especially discouraging when the potential buyer learns of an item of interest came up for sale, but was not alerted until after the item has already been sold.

A problem for online commerce sites is that of losing sales. For example, once a potential buyer leaves the online commerce site, the chances of that potential purchaser remembering the item, the parameters of the item, and even the actual online commerce site are greatly diminished. Therefore sellers have a great interest in maintaining an exchange of information with potential purchasers.

Therefore, a need exists for a method that allows a purchaser to know of the sale of an online item and that allows an online commerce site to maintain an exchange of information with a potential purchaser.

### BRIEF SUMMARY OF THE INVENTION:

The present invention provides a method for indicating a predetermined item in a communication system. A mobile unit indicates a predetermined item to an online screening processor, which may be in the form of a preference list. The mobile unit can be a wireless phone, a Personal Digital Assistant (PDA), a pager, or a personal computer application. The online screening processor stores the indication of the predetermined item. The online screening processor accepts and stores a list of unique addresses of communication units that should be alerted upon availability of the predetermined item.

If the list is a dynamic preference list, which is a list that includes a plurality of criteria, the user of the mobile unit can specify a desired value for each of the criterion. For dynamic preference lists, the number of criterion needed to trigger an alert of the mobile unit decreases over time. If the preference list is dynamic, the online screening processor accepts and stores the trigger level. Upon expiration of a timer or the like, the online screening processor decrements the trigger level, thereby lowering the number of criteria needed to generate a match and alert the mobile unit.

The online screening processor will initiate, preferably at predetermined time intervals or upon a trigger indicating that a new item has been added to the online commerce site, a session with an online commerce site to determine if predetermined items are now available. The online screening processor generates an inventory list at the online commerce site and compares the inventory list to the list of predetermined items that were stored by the online screening processor.

If there is a match between the inventory list and the list of predetermined items, the online screening processor determines if the list of predetermined items is a dynamic preference list. If so, the online screening processor determines if the match exceeds a trigger level. If so, the online screening processor initiates a multimedia session with all unique prespecified addresses.

The prespecified mobile units receive and display this indication of the availability of the predetermined item from the online screening processor. The mobile unit then accepts input from the user of the mobile unit. The information received from the user of the mobile unit is sent to the online screening processor.

A multimedia session is then established between the mobile unit and the online commerce site. The multimedia session connects the mobile unit and online commerce site to facilitate an exchange of information between the two with the intent that the mobile user may purchase or receive additional information about the item from the online commerce site.

### BRIEF DESCRIPTION OF THE SEVERAL VIEWS OF THE DRAWINGS:

FIG. 1 depicts a communication system in accordance with the present invention.

FIG. 2 depicts a flow chart of a method for indicating a predetermined item in a communication system in accordance with an exemplary embodiment of the present invention.

FIG. 3 depicts a flow chart of a method for indicating the predetermined item by a communication unit in accordance with an exemplary embodiment of the present invention.

FIG. 4 depicts a flow chart of a method for indicating availability of the predetermined item in accordance with an exemplary embodiment of the present invention.

### DETAILED DESCRIPTION OF THE INVENTION:

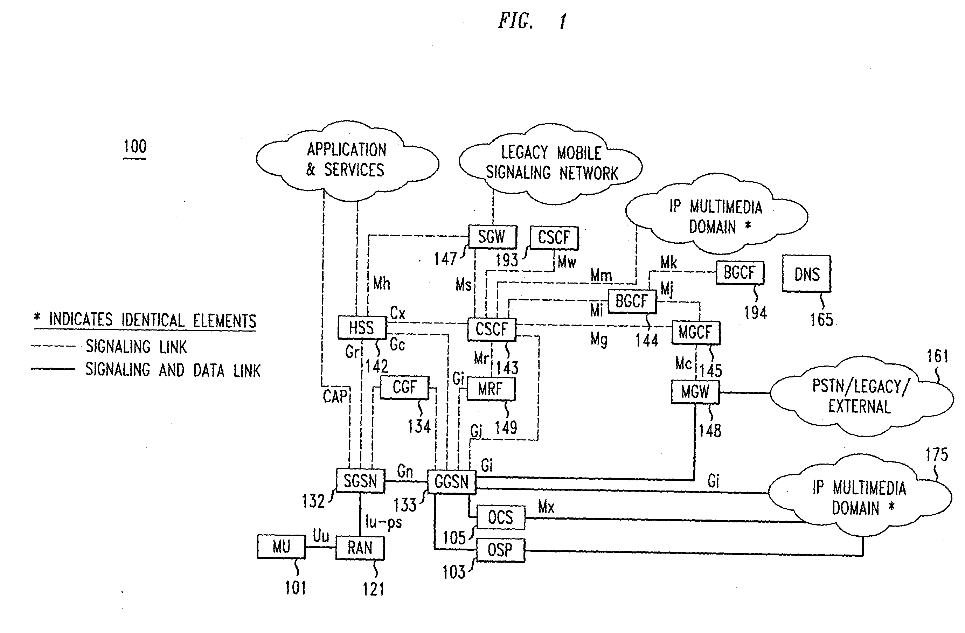

The present invention can be better understood with reference to FIGs. 1 through 4. FIG. 1 depicts a communication system 100 in accordance with the present invention. In an exemplary embodiment depicted in FIG. 1, communication system 100 is a Third Generation (3G) wireless system. Communication system 100 can alternately be any digital cellular system. 3G wireless systems include multiple air interface standards, including cdma2000, Universal Mobile Telecommunications System (UMTS), Wideband CDMA (W-CDMA), Global System for Mobile Communications (GSM), and UWC-136, a TDMA-based technology.

As depicted in FIG. 1, communication system 100 depicts a 3GPP reference architecture of a UMTS wireless network. It should be understood that communication system 100 can alternately be other reference architectures. Communication system 100 includes logical elements that have been defined based on network functions that have been grouped together to form each logical element. Actual implementation may contain multiple copies of these logical elements within multiple networks, and can merge any of these logical elements into single hardware entities. The architecture of the present invention is designed to utilize emerging Internet standards and protocols. An example of this is the use of Session Initiation Protocol (SIP) for IP Multimedia Subsystem (IMS) signaling for establishing a call. Use of emerging internet-based protocols, such as IPv6, allows for the IMS to provide internet-like functionality and services to mobile units along with voice and data services.

Communication system 100 includes a plurality of logical elements, comprising mobile unit 101, Radio Access Network (RAN) 121, packet-switched domain 131, IP Multimedia Subsystem (IMS) 141, Charging Gateway Function (CGF) 134, signaling gateway (SGW) 147, online screening processor 103, and online commerce site 105.

Online screening processor 103 includes a central processor, memory, and input and output ports. Online screening processor 103 provides the ability to set up and tear down multimedia calls. Online screening processor 103 stores customer preferences, predetermined items, addresses of communication units to be alerted, and dynamic preference lists.

Online commerce site 105 includes a central processor, memory, and input and output ports. Online commerce site 105 provides the ability to set up and tear down multimedia calls. Online commerce site 105 stores items and attributes and information pertaining to the items, such as price, availability, and other pertinent details relating to the items.

Both the UMTS-based and GSM/EDGE-based Radio Access Networks are show in this figure. Charging Gateway Functionality (CGF) 134 is now part of the base 3GPP communication system 100 to show the collection of billing information in packet-switched domain 131. As depicted in FIG. 1, Radio Access Network (RAN) and packet-switched domain 131 are independent of IMS 141.

Mobile unit 101 can be any device or combination of devices that can be used to connect with a wireless network. Mobile unit 101 is preferably a 3G mobile unit that communicates with communication system 100 via an air interface supported by communication system 100. Alternately, mobile unit 101 can be a softphone on a computer, a Personal Digital Assistant (PDA), a pen tablet, or a web pad.

RAN 121 is preferably a UMTS Terrestrial Radio Access Network (UTRAN), which is the primary interface between the wireless device and the UMTS access network. Alternately, RAN 121 can be a GSM/EDGE Radio Access Network (GERAN), which is the primary interface between the wireless device and the GSM/EDGE access network. RAN 121 is coupled to the user equipment via an air interface, such as a 3G air interface.

Packet-switched domain 131 includes Serving GPRS Support Node (SGSN) 132 and GPRS Gateway Support Node (GGSN) 133. SGSN 132 provides packet mobility management, authentication, session management, accounting, mapping of IP addresses to user equipment identification, such as IMSI, maintenance of mobile state information, and interfacing with GGSN 133. GGSN 133 provides interworking between the SGSNs and external packet data networks using IP.

IMS 141 preferably includes Call State Control Function (CSCF) 143, Breakout Gateway Control Function (BGCF) 144, Media Gateway Control Function (MGCF) 145, Media Gateway (MGW) 148, and Multimedia Resource Function (MRF) 149.

CSCF 143 is a signaling entity for bearer/session control. CSCF 143 manages SIP sessions, provides features/services and coordinates with other network elements for session control, feature/service control and resource allocation.

CSCF 143 performs multiple functions, which in an exemplary embodiment include incoming call gateway, call control function, serving profile database, and address handling. In addition, in accordance with an exemplary embodiment of the present invention, CSCF 143 performs GMSC Emulation as necessary to support call delivery to IMS-homed subscribers being served by a remote MSC server.

CSCF 143 has interfaces with many network elements, preferably as defined by the Third Generation Partnership Project standards, in standards document 3GPP TS 23.002. CSCF 143 is preferably connected to a plurality of elements using the SIP protocol. These network elements include GGSN 133 via interface Gi, MGCF 145 using interface Mg, BGCF 144 using interface Mi, MRF 149 using interface Mr, IP Multimedia Domain 175 (not shown), and other CSCFs, such as CSCF 193, using interfaces Mw. CSCF 143 is coupled with HSS 142 via interface Cx, preferably using the DIAMETER protocol. CSCF 143 is coupled to SGW 147 via interface Ms, which preferably uses a MAP protocol, but can alternately use a CAP or other SS7 application protocol.

BGCF 144 is a signaling entity for bearer/session control. The primary responsibility of BGCF 144 is to select the network to use for inter-working with PSTN 161 for a call from mobile unit 101 to a PSTN address. BGCF 144 preferably performs additional functions, which include but are not limited to selection of the appropriate MGCF, hiding of network information from other networks, and provision of security through authorization of peer network elements.

BGCF 144 communicates with CSCF 143 via Mi interface, with MGCF 145 via Mj interface, and with BGCF 194 via Mk interface. These interfaces are defined in 3GPP TS 23.002. SIP is the preferred protocol for these standard interfaces. BGCF 144 may also have interfaces with other entities (not shown) to assist in making decisions within communication system 100.

BGCF 144 is preferably a logical entity from the 3GPP reference model. The actual implementation of BGCF 144 may be combined on the same platform with other logical entities that perform signaling functions such as CSCF 143, MGCF 145, and SGW 147.

To select a PSTN gateway, BGCF 144 in the home network receives the call origination message, which is an exemplary embodiment is a SIP INVITE message, from CSCF 143. The receipt of a call origination message from CSCF 143 indicates that the destination is a PSTN address. BGCF 144 needs to determine which network should be used to provide inter-working with PSTN 161. BGCF 144 may use data from multiple sources to make this determination. Examples of factors which BGCF 144 may look at in making this determination include, but are not limited to, the current location of the calling UE, the location of the PSTN address, local policies and business agreements between the visited and home networks, the desire to minimize path distance within the PSTN network, and a desire for the least-cost path. If the PSTN gateway is decided to be the home network, an MGCF within the home network, such as MGCF 145, will be selected. If the PSTN gateway is decided to be at another network, the BGCF address for the other network must be determined so that the processing may be forwarded to that network.

BGCF 144 may also provide information hiding functionality. When two BGCFs are used across a network boundary, then the BGCFs may be used to hide local network information from the other network. BGCF 144 can also provide security in communication system 100. BGCF 144 provides security by performing authorization of peer network elements for peer-to-peer SIP application level communication.

MGCF 145 terminates signaling and provides the call control interface and translations between IMS 141 and PSTN 161. MGCF 145 also provides connection control for the media channels in MGW 148. MGCF 145 communicates with MGW 148 via the Mc interface, with BGCF 144 via the Mj interface, and with CSCF 143 via the Mg interface.

MGCF 145 also preferably provides signaling to control a set of Media Gateways (MGW), such as MGW 148. This signaling is preferably in the form of H.248. With H.248, MGCF 145 is able to control establishment of bearer resources for sessions that require inter-working for bearer between PSTN 161 and IMS 141. For calls that require the services of a network operator's MGW, ports are allocated via requests from MGCF 145 within that network operator's network.

Signaling allows MGCF 145 to perform multiple operations with respect to MGW 148. These operations include MGW registration, bearer establishment control between IMS 141 and PSTN 161, request for allocation of media translation resources (i.e. compression, echo cancellation, vocoding, etc.), control of events detected at MGW 148, application of signals such as tones and announcements by MGW 148, and collection of statistics.

MGCF 145 preferably controls multiple MGWs. To be placed into service, the MGWs register themselves with their default MGCF. After registration with an MGCF, MGWs can begin bearer processing.

MGCF 145 preferably implements a SIP-based interface to CSCF 143. BGCF 144 may be in the signaling path between CSCF 143 and MGCF 145. Using this interface, MGCF 145 accepts commands from CSCF 143 to perform functions related to the control of a call.

MGW 148 is the element that translates between a media flow, such as voice, on a given IP network and bearer data on PSTN 161. MGW 148 terminates circuit-switched bearer traffic from PSTN 161 and terminates IP media flow as packet streams through GGSN 133 or MGW 173, eventually reaching the user equipment. MGW 148 preferably performs vocoding and may also provide tones and announcements. If in-band signaling methods are supported at MGW 148, then for PSTN traffic using in-band signaling, MGW 148 preferably terminates both bearer and signaling traffic, and forwards the signaling messages to MGCF 145. MGW 148 interfaces with GGSN 133 via the Gi interface and with MGCF 145 via the Mc interface.

MGW 148 may include resources to modify a bearer stream. These resources allow MGW 148 to perform encoding, compression, echo cancellation, packetization, transcoding, packet timing synchronization, and packet loss handling.

MGW 148 preferably supports multiple types of voice encoding. These include, but are not limited to, G.711, Adaptive Multi-Rate (AMR), and other G.7xx encoding schemes. MGW 148 is preferably able to use G.711 to encode and decode voice on trunks connected to a PSTN network.

MGW 148 preferably organizes bearer connections using H.248 contexts containing terminations. MGW 148 may include numerous simultaneous contexts.

MGW 148 also preferably includes resources to support a plurality of signaling mechanisms, including but not limited to registration with MGCF 145, detection of events (e.g. Dual-Tone Multi-Frequency (DTMF) detection), application of tones and announcements to bearer streams, graceful teardown and random restart, notification, generation of statistics, and support of H.248 packages.

MRF 149 provides packet-based media services, such as advanced announcement generation and detection, N-way conferencing, tone and announcement generation, and future advanced media services, such as video mixing. MRF 149 also preferably provides transcoding and interactive voice response. MRF 149 interfaces with CSCF 143 via the Mr interface, with IP Multimedia Domain 175 (not shown), and with GGSN 133 via the Gi interface.

In an exemplary embodiment, MRF 149 comprises two parts, a controller part and a bearer part. CSCF 143 preferably interfaces with the MRF controller part to request media services using SIP. The controller part preferably communicates with the bearer part via H.248. The bearer part preferably supports RTP/UDP/IP. Some of the resources maintained by MRF 149 include vocoders, transcoders, compression entities, bearer-stream mixers, echo cancellors, and other DSP resources. Vocoders are needed at MRF 149 for transcoding and mixing of multimedia streams.

HSS 142 provides support for subscriber authentication, subscriber profile management, service authorization, subscriber location management, intersystem handover, and call routing. HSS 142 provides these functions for users receiving service from circuit-switched domain 151, packet-switched domain 131, and IMS 141.

HSS 142 preferably maintains a subscriber database that includes information including, but not limited to, the identity of the subscriber, services and associated policies, location, and authentication data.

HSS 142 supports the following interfaces. Interface Cx is the interface to CSCF 143. The preferred protocol for this interface is DIAMETER. Interface Mh is the interface to SGW 147. Interface Gr is the interface to SGSN 132. Interface Gc is the interface to GGSN 133. Interface C is the interface to GMSC server 153. Interfaces Mh, Gr, Gc, D and C preferably utilize a MAP protocol.

In accordance with an exemplary embodiment of the present invention, HSS 142 recognizes when features and services are to be implemented for a subscriber at either MSC server 152 or IMS 141. In addition, HSS 142 supports procedures for IMS-homed mobile units being served at a remote MSC Server.

SGW 147 terminates transport protocols for signaling between a PS domain and an IMS. The services of SGW 147 are preferably used to ensure transport interworking between the SS7 and the IP transport of signaling on its various interfaces (not all shown). SGW 147 communicates with CSCF 143 and HSS 142 via the Ms and Mh interfaces, respectively.

SGW 147 provides for HSS Subscriber roaming into circuit-switched wireless networks and transport of circuit-switched signaling over IP, such as TCP/IP.

It should be understood that a multimedia mail system can be located within communication system 100. The multimedia mail system is preferably a separate entity, but can alternately be incorporated into various pieces of communication system 100.

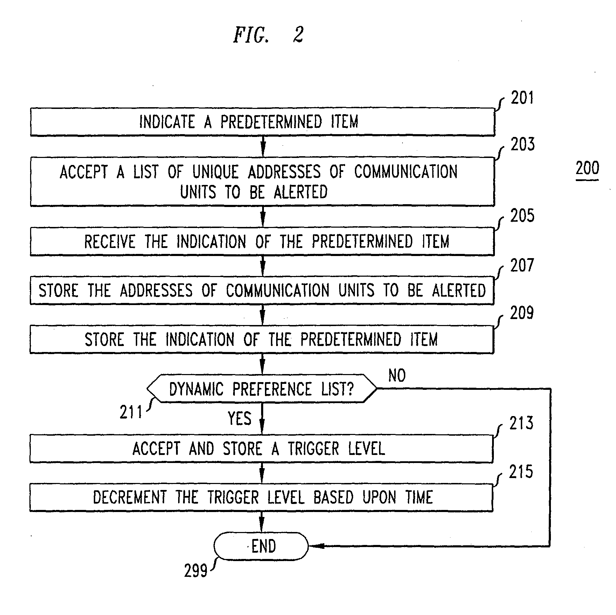

FIG. 2 depicts a flow chart 200 of a method for indicating a predetermined item in a communication system in accordance with an exemplary embodiment of the present invention.

Mobile unit 101 indicates (201) a predetermined item. The indication is preferably communicated to online screening processor 103. The indication can also be input on a computer.

Online screening processor 103 accepts (203) a list of unique addresses of communication units to be alerted upon availability of the predetermined item. The list of unique addresses can be generated by mobile unit 101 or via a computer and sent to online screening processor 103.

Online screening processor 103 receives (205) an indication of the predetermined item. This can be in the form of a preference list. The preference list can be sent from mobile unit 101 or on behalf of mobile unit 101 via a computer or the like.

Online screening processor stores (207) the addresses of the communication units that are to be alerted when the predetermined item becomes available.

Online screening processor 103 stores (209) the indication of the predetermined item. In an exemplary embodiment, online screening processor correlates the addresses of the communication units that are to be alerted and the predetermined item so that when the predetermined item becomes available, online screening processor 103 knows which communication units to alert.

An element within communication system 100 determines (211) if the list is a dynamic preference list. A dynamic preference list is a list that includes a plurality of criteria. The user of the mobile unit can specify a desired value for each of the criterion. The list is dynamic if, over time, the number or the value of criterion needed to trigger an alert of the mobile unit decreases. If the preference list is not dynamic, the process ends (299).

If the preference list is dynamic, online screening processor accepts (213) a trigger level, and preferably stores the trigger level. For example, the default trigger level can be 100%, meaning that in order to trigger an alert, all criteria must be met. If the trigger level is set to 80%, for example, this can indicate either that 80% of the criteria must be met, or that each criterion must exceed an 80% level.

Upon expiration of a timer or the like, online screening processor 103 decrements (215) the trigger level. This is preferably decremented upon the passing of a predetermined amount of time, upon the expiration of a timer.

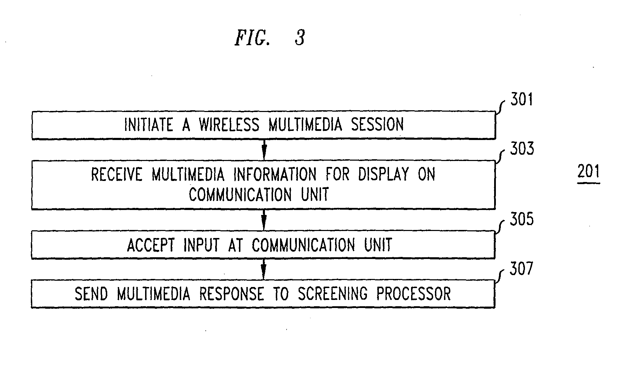

FIG. 3 depicts a flow chart 201 of a method for indicating the predetermined item by a communication unit in accordance with an exemplary embodiment of the present invention. Mobile unit 101 preferably indicates the predetermined item from online screening processor 103.

Mobile unit 101 initiates (301) a wireless multimedia session between mobile unit 101 and online screening processor 103 by sending a message utilizing a protocol capable of setting up a multimedia session, such as SIP (Session Initiation Protocol).

Mobile unit 101 receives (303) from online screening processor 103 multimedia information for display on mobile unit 101. The multimedia information can include images, video, audio, text, or any other information for display on mobile unit 101.

Mobile unit 101 accepts (305) input from a user of mobile unit 101. This input can be from keypad input, voice commands, cursor position, or any other suitable means of indicating the choice of a user of mobile unit 101.

Mobile unit 101 sends (307) multimedia responses to online screening processor 103. This is preferably accomplished utilizing a peer-to-peer connection that sends a data message in bearer path that the online screening processor 103 understands, such as tones, voice recognition, and other suitable communication techniques.

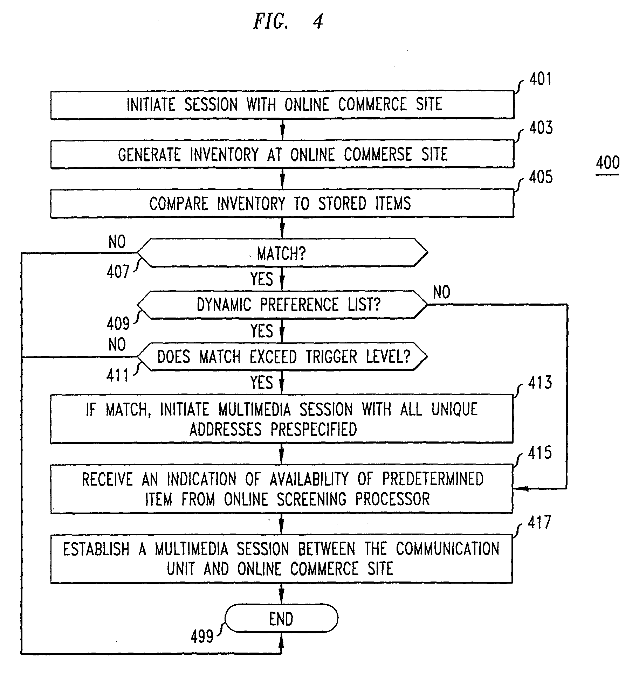

FIG. 4 depicts a flow chart 400 of a method for indicating availability of the predetermined item in accordance with an exemplary embodiment of the present invention.

Online screening processor 103 initiates (401) a session with online commerce site 105 to determine if predetermined items are now available. In an alternate embodiment, online commerce site 105 pushes new item information to online screening processor 103, which processes the information accordingly. The information can be sent from online commerce site 105 any time product information changes or at predetermined intervals.

Online screening processor 103 generates (403) an inventory list at online commerce site 105. The inventory list may comprise a comprehensive list of all items offered at online commerce site 105, or may be limited to a specific search request.

Online screening processor 103 compares (405) the inventory list to the list of predetermined items that were stored by online screening processor 103. Online screening processor 103 may do this for one user, or may run this comparison for a plurality of users who have stored predetermined items with online screening processor 103.

Online screening processor 103 determines (407) if there is a match between the inventory list and the list of predetermined items. If there is not a match, the process ends (499), and can be restarted at a later time.

If there is a match as determined at step 407, online screening processor 103 determines (409) if the list of predetermined items is a dynamic preference list. A dynamic preference list is a list that includes a set of criteria that is required to make a match, where the list of criteria lessens as time passes without a match. If not, the process goes to step 415.

If this is a dynamic preference list, online screening processor 103 determines (411) if the match exceeds a trigger level. In an exemplary embodiment, the default trigger level is one hundred percent. In this embodiment, all characteristics specified by the user must be met in order for the item to be communicated to the user. If the match does not exceed the trigger level, online screening processor may decrement the trigger level, and the process ends (499).

If the match does exceed the trigger level, online screening processor 103 initiates (413) a multimedia session with all unique prespecified addresses. The unique prespecified addresses can be the originator of the list, or can include other mobile units or communication units that are interested in the results of the predetermined items.

The prespecified mobile units receive (415) an indication of the availability of the predetermined item from online screening processor 103. This is preferably accomplished by receiving multimedia information at the mobile unit from online screening processor 103. The information is displayed at the mobile unit. The mobile unit then accepts input from the user of the mobile unit, the input selecting one of the options sent in the multimedia session. The selection can be accepted from a keypad of the mobile unit, from a mouse, the cursor position on the display of the mobile unit, speech recognition, or any other suitable means. The information received from the user of the mobile unit is sent to online screening processor 103.

The communication system then establishes (417) a multimedia session between the mobile unit and online commerce site 105. The multimedia session connects the mobile unit and online commerce site 105 to facilitate an exchange of information between the two with the intent that the mobile user may purchase or obtain additional information about the item from online commerce site 105.

The process then ends (499).

The present invention thereby provides a method for indicating the availability of a predetermined item at an online commerce site. A mobile unit sets up a list of preferred items and sends the list to an online screening processor. The online screening processor interfaces with online commerce sites to obtain information about the desired items. The online screening processor receives multimedia information for display on a mobile unit. This multimedia information is sent to the mobile unit. A user of the mobile unit can enter input at the mobile unit, and send the multimedia responses to the online screening processor. This can lead to a multimedia session being established between at least one mobile unit and the online commerce site.

While this invention has been described in terms of certain examples thereof, it is not intended that it be limited to the above description, but rather only to the extent set forth in the claims that follow.

## Claims

1. A method for indicating the availability of a predetermined item comprising indicating from a mobile unit a predetermined item from an online screening processor.

2. A method for indicating the availability of a predetermined item in accordance with claim 1, wherein the step of indicating from a mobile unit a predetermined item from an online screening processor comprises:
initiating a wireless multimedia session between the mobile unit and the online screening processor;
receiving from the online screening processor multimedia information for display on the mobile unit;
accepting input at the mobile unit; and
sending multimedia responses to the online screening processor.

3. A method for indicating the availability of a predetermined item in accordance with claim 1, the method further comprising the step of receiving at the mobile unit an indication of availability of the predetermined item from an online screening processor.

4. A method for indicating the availability of a predetermined item in accordance with claim 3, wherein the step of receiving an indication of availability of a predetermined item from an online screening processor comprises:
receiving multimedia information from the online screening processor;
displaying the multimedia information at the mobile unit;
accepting input from the user of the mobile unit of one of the options of the multimedia information; and
sending the input from the mobile unit to the online screening processor.

5. A method for indicating the availability of a predetermined item in accordance with claim 3, further comprising the step of establishing a multimedia session between the mobile unit and an online commerce site.

6. A method for indicating the availability of a predetermined item in accordance with claim 5, further comprising the step of performing multimedia online interactions between the online commerce site and the mobile unit.

7. A method for indicating the availability of a predetermined item comprising:
accepting a multimedia session from a mobile unit;
receiving information from the mobile unit indicating establishment of a preference list;
accepting a list of unique addresses of mobile units to be alerted at an online screening processor; and
storing the preference list and the list of unique addresses of mobile units at the online screening processor.

8. A method for indicating the availability of a predetermined item in accordance with claim 7, further comprising the step of receiving a trigger level at the online screening processor.

9. A method for indicating the availability of a predetermined item comprising:
initiating a session between an online screening processor and an online commerce site;
inventorying items at the online commerce site;
comparing the inventoried items to a set of stored preferences;
determining if the inventoried items match the stored preferences; and
if the inventoried items match the stored preferences, initiating a multimedia session between the online commerce site and a mobile unit.

10. A method for indicating the availability of a predetermined item in accordance with claim 9, further comprising the step of initiating a multimedia session between the online commerce site and at least one mobile unit.
